# EUROPÄISCHE PATENTANMELDUNG

(11) **EP 2 163 967 A2**
(43) Veröffentlichungstag der Anmeldung: **17.03.2010**
(21) Anmeldenummer: 09011770.6
(22) Anmeldetag: 15.09.2009
(51) Int. Cl.: G06F 1/16

(54) **Laptop**

(30) Priorität: 16.09.2008 DE 202008012262 U
(71) Anmelder: Röhrig, Norbert, 50321 Brühl (DE)
(72) Erfinder: Röhrig, Norbert, 50321 Brühl (DE)
(74) Vertreter: Grünecker, Kinkeldey, Stockmair & Schwanhäusser Anwaltssozietät

(57) **Zusammenfassung**

Die vorliegende Erfindung betrifft einen Laptop (1) mit einem Gehäuse (2), welches einen Prozessor in sich aufnimmt und eine Eingabeeinrichtung (4) trägt, die mit dem Prozessor zusammenwirkt, und mit einem verschwenkbar an dem Gehäuse (2) gelagerten Gehäusedeckel (3) mit Anzeigeeinrichtung (6), der auf das Gehäuse (2) zum Verschließen auflegbar ist und im hochgeschwenkten Zustand von dem Gehäuse (2) so abragt, dass die Anzeigeeinrichtung (6) dem die Eingabeeinrichtung (4) bedienenden Benutzer zugewandt ist

Mit der vorliegenden Erfindung wird ein Laptop mit verbesserter Fähigkeit angegeben, Präsentationen elektronisch vorzustellen. Der erfindungsgemäße Laptop (1) weist auf der der Anzeigeeinrichtung (6) abgewandten Seite des Gehäusedeckels (3) eine weitere Anzeigeeinrichtung (8) auf, die mit dem Prozessor zusammenwirkt.

## Beschreibung

Die vorliegende Erfindung betrifft einen Laptop mit einem Gehäuse, welches einen Prozessor in sich aufnimmt und eine Eingabeeinrichtung trägt, die mit dem Prozessor zusammenwirkt, und mit einem verschwenkbar an dem Gehäuse gelagerten Gehäusedeckel mit Anzeigeeinrichtung, der auf das Gehäuse zum Verschließen auflegbar ist und im hochgeschwenkten Zustand von dem Gehäuse so abragt, dass die Anzeigeeinrichtung dem die Eingabeeinrichtung bedienenden Benutzer zugewandt ist.

Solche Laptops sind allgemein bekannt und gebräuchlich. Entsprechende tragbare Computer werden heutzutage auch zu Präsentationszwecken benutzt. Dabei hat der Benutzer die Möglichkeit, den Laptop an eine weitere Anzeigeeinrichtung, wie beispielsweise einen Beamer oder einen Großbildschirm anzuschließen, um das auf der Anzeigeeinrichtung des Laptops Angezeigte einem größeren Publikum zugänglich zu machen.

Wird lediglich einer oder wenige Personen einbezogen, kann der Benutzer heutzutage seinen Laptop mit gewissem Abstand zu sich und den weiteren Personen aufstellen, so dass alle Personen auf die Anzeigeeinrichtung des Laptops schauen können. Dieses Vorgehen ist allerdings sehr aufwändig. In üblichen Gesprächssituationen sitzen sich zwei Gesprächspartner gegenüber, so dass konventionelle Laptops im übrigen eine ungewöhnliche Konstellation erforderlich machen.

Davon ausgehend liegt der Erfindung die Aufgabe zugrunde, einen Laptop mit verbesserten Gebrauchseigenschaften zu schaffen.

Zur Lösung des obigen Problems wird mit der vorliegenden Erfindung ein Laptop mit den Merkmalen von Anspruch 1 vorgeschlagen. Dieser unterscheidet sich dadurch von dem gattungsbildenden Stand der Technik, dass auf der der Anzeigeeinrichtung abgewandten Seite des Gehäusedeckels eine weitere, mit dem Prozessor zusammenwirkende Anzeigeeinrichtung vorgesehen ist.

Bei dem erfindungsgemäßen Laptop ist die weitere Anzeigeeinrichtung an dem Gehäusedeckel vorgesehen. Dementsprechend wird die weitere Anzeigeeinrichtung zusammen mit der ersten, originären Anzeigeeinrichtung vor der Benutzung des Laptops hochgeschwenkt. Im Falle einer Präsentation von Inhalt des Prozessors können dem präsentierenden Benutzer des Laptops weitere Personen gegenübersitzen, die den Inhalt der Präsentation über die weitere Anzeigeeinrichtung erfahren können. Diese weitere Anzeigeeinrichtung ist üblicherweise im wesentlichen mit gleicher Größe und Gestaltung wie die originäre Anzeigeeinrichtung des Laptops ausgebildet. Vorzugsweise ist die weitere Anzeigeeinrichtung so ausgebildet, dass über die weitere Anzeigeeinrichtung die dem Benutzer des Laptops gegenübersitzenden Personen das gleiche Bild und den gleichen Aufbau sehen wie der Benutzer des Laptops auf seiner originären Anzeigeeinrichtung.

Da auch bei dem erfindungsgemäßen Laptop üblicherweise der Gehäusedeckel die Eingabeeinrichtung, speziell die Tastatur, gegebenenfalls ein Mousepad abdeckt, so dass bei geschlossenem Laptop die weitere Anzeigeeinrichtung die Außenseite des Laptops bilden würde, wird gemäß einer bevorzugten Ausgestaltung der vorliegenden Erfindung vorgeschlagen, eine Abdeckung vorzusehen, die verschwenkbar an dem Gehäuse gelagert ist und gegen die weitere Anzeigeeinrichtung anlegbar ist. Diese Abdeckung wirkt wie ein Deckel und hat zumindest die Abmessungen der weiteren Anzeigeeinrichtung, um diese bei geschlossenem Laptop außenseitig zu schützen.

Die weitere Abdeckung kann an einem beliebigen Seitenrand des Gehäusedeckels verschwenkbar gelagert sein. Sie kann dabei insbesondere auch als Mittel zur Abschattung der Anzeigeeinrichtung bzw. der weiteren Anzeigeeinrichtung eingesetzt werden. Im Hinblick auf einen möglichst ungestörten Aufbau des Laptops bei hochgeschwenkter Anzeigeeinrichtung ist die Abdeckung allerdings vorzugsweise derart verschwenkbar vorgesehen, dass diese in einer Ausrichtung im wesentlichen parallel zu dem Gehäuse des Laptops angeordnet werden kann, wenn der Gehäusedeckel hochgeschwenkt ist, d.h. der Benutzer die dem Laptop zugeordnete originäre Anzeigeeinrichtung betrachten und die Eingabeeinrichtung benutzen kann. Mit anderen Worten liegt der Deckel flach auf dem Tisch des Benutzers auf der den weiteren Betrachtern zugewandten Seite.

Gemäß einer bevorzugten Weiterbildung der vorliegenden Erfindung ist die weitere Anzeigeeinrichtung verschwenkbar an einem freien Ende der originären Anzeigeeinrichtung angeordnet. Diese originäre Anzeigeeinrichtung ist üblicherweise an ihrem unteren Ende mit einem Scharnier mit dem Gehäuse verbunden ist. Das freie Ende wird üblicherweise durch eine Kante der weiteren Anzeigeeinrichtung vorgegeben, die sich parallel zu der Schwenkachse dieses Scharniers erstreckt. Die bevorzugte Weiterbildung bildet die Möglichkeit, die Anzeigeeinrichtung und die weitere Anzeigeeinrichtung nach Art eines umgedrehten V auszustellen, so dass beide Anzeigeeinrichtungen mit optimalem Neigungswinkel relativ zu dem Betrachter und unabhängig voneinander eingestellt werden können.

Gemäß einer weiteren bevorzugten Ausgestaltung der vorliegenden Erfindung sind die Abdeckung und die weitere Anzeigeeinrichtung über ein gemeinsames Scharnier gelenkig an der Anzeigeeinrichtung angelenkt. Dieses gemeinsame Scharnier befindet sich dabei ebenfalls vorzugsweise an dem freien Ende der Anzeigeeinrichtung. Die Abdeckung kann dementsprechend zur Abschattung der weiteren Anzeigeeinrichtung ausgeschwenkt werden. Die Verschwenkbarkeit der Abdeckung sollte aber so ausgebildet sein, dass diese auch zur Abschattung der originären Anzeigeeinrichtung ausgeschwenkt werden kann, d.h. sich in einem Winkelbereich von etwa 90 bis 180 Grad relativ zu der Schauseite der originären Anzeigeeinrichtung erstrecken kann. In dieser Ausrichtung befindet sich die Abdeckung dachförmig über der originären Anzeigeeinrichtung. Die Abdeckung kann auch so weit relativ zu der originären Anzeigeeinrichtung verschwenkbar sein, dass diese beim Betrieb die Tastatur ganz oder teilweise abdeckt, um beispielsweise eine ungewollte Sicht auf den Bildschirm und/oder die Eingabeeinrichtung zu verhindern, was vorteilhaft ist, wenn vertrauliche Informationen an dem Laptop verarbeitet werden.

Um auch den weiteren Betrachtern die Möglichkeit zu geben, über den Prozessor die Anzeige an der Anzeigeeinrichtung zu verändern, wird gemäß einer bevorzugten Weiterbildung der vorliegenden Erfindung vorgeschlagen, eine auf der Anzeigeeinrichtung abgewandten Seite vorgesehene Eingabeeinrichtung auszubilden, die mit dem Prozessor kommuniziert. Idealerweise ist der Laptop bei dieser Ausgestaltung spiegelbildlich ausgebildet, so dass auf beiden Seiten des hochgeschwenkten Gehäusedeckels Informationen in den Prozessor eingegeben und die dort eingegebenen Informationen über die Anzeigeeinrichtungen angezeigt werden können. Dabei werden die Informationen vorzugsweise simultan sowohl an dem originären Bildschirm (originäre Anzeigeeinrichtung) wie auf dem weiteren Bildschirm (weitere Anzeigeeinrichtung) angezeigt.

Die weitere Eingabeeinrichtung umfasst vorzugsweise eine Tastatur, die auf der der weiteren Anzeigeeinrichtung zugewandten Innenseite der Abdeckung vorgesehen ist.

Gemäß einer bevorzugten Weiterbildung, die es dem Benutzer des Laptops ermöglicht, auf einfache Weise und automatisiert die weitere Anzeigeeinrichtung einzuschalten und somit im Nichtpräsentationsmodus Strom zu sparen wird dadurch geschaffen, dass ein Schalter vorgesehen wird, der die weitere Anzeigeeinrichtung zwangsläufig ausschaltet, wenn die weitere Anzeigeeinrichtung durch die Abdeckung abgedeckt ist. Mit anderen Worten wird die weitere Anzeigeeinrichtung inaktiv geschaltet, wenn diese über die Abdeckung verdeckt bzw. geschützt wird.

Weitere Einzelheiten und Vorteile der vorliegenden Erfindung ergeben sich aus der nachfolgenden Beschreibung eines Ausführungsbeispiels in Verbindung mit der Zeichnung. In dieser Zeichnung:
- Figur 1: eine Seitenansicht des Ausführungsbeispiels bei zugeklapptem Laptop;
- Figur 2: das in Figur 1 gezeigte Ausführungsbeispiel bei aufgeklapptem Laptop;
- Figur 3: die in Figur 2 gezeigte Position in perspektivischer Darstellung;
- Figur 4: eine Seitenansicht des in den Figuren 1 bis 3 gezeigten Ausführungsbeispiels bei ausgeschwenkter weiterer Anzeigeeinrichtung; und
- Figur 5: die in Figur 4 dargestellte Anordnung in perspektivischer Darstellung.

Die Figuren zeigen ein mit Bezugszeichen 1 gekennzeichneten Laptop mit einem Gehäuse 2, an dem ein Gehäusedeckel 3 verschwenkbar gelagert ist. Das Gehäuse 2 trägt an seiner Oberseite eine Eingabeeinrichtung in Form einer Tastatur 4. Ansonsten ist das Gehäuse 2 in üblicher Weise mit Schnittstellen für Kabel und Speichermedien ausgeformt. An seiner Rückseite weist das Gehäuse 2 ein erstes Scharnier 5 auf, über welches der Gehäusedeckel 3 verschwenkbar an dem Gehäuse 2 befestigt ist. Auf der der Tastatur 4 zugewandten Seite bildet der Gehäusedeckel 3 eine erste, originäre Anzeigeeinrichtung in Form eines umrahmten Bildschirmes 6 aus.

An dem dem Scharnier 5 gegenüberliegenden freien Ende der originären Anzeigeeinrichtung 6 befindet sich ein zweites Scharnier 7, über welches eine weitere Anzeigeeinrichtung 8 verschwenkbar an der originären Anzeigeeinrichtung 6 gelagert ist.

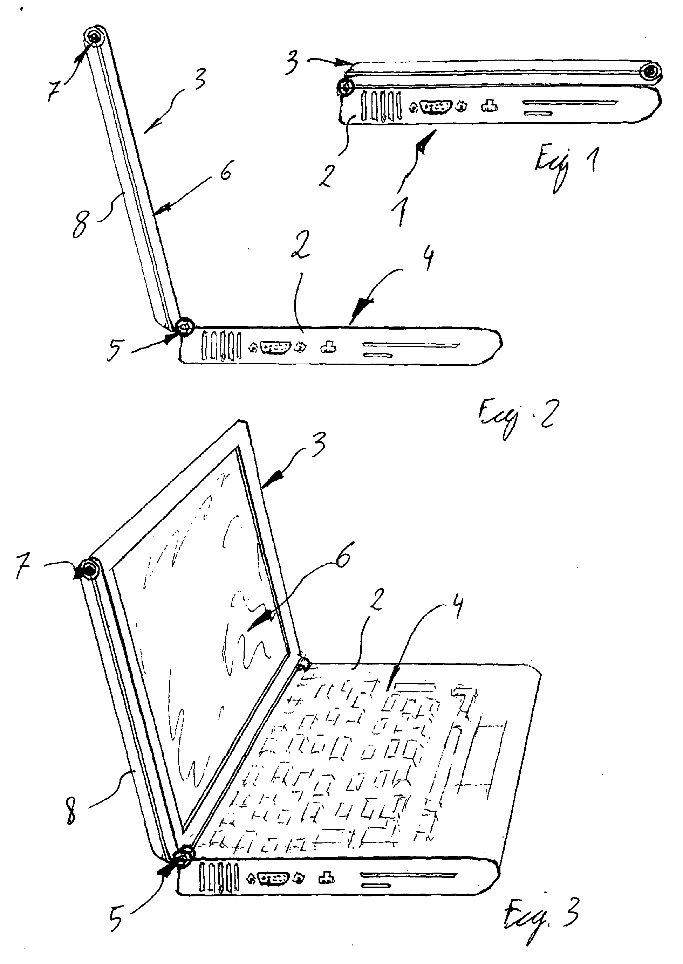

Die beiden Anzeigeeinrichtungen 6, 8 haben im Wesentlichen identische Abmessungen und liegen in der in den Figuren 1 bis 3 gezeigten Gebrauchsstellung des Laptops in einer parallelen Ausrichtung zueinander. Der durch die weitere Anzeigeeinrichtung gebildete weitere Bildschirm liegt auf der Außenseite des geschlossenen Laptops (vgl. Figur 1) frei. Zum Schutz des weiteren Bildschirms 8 kann dieser mit einer kratzfesten transparenten Folie abgedeckt sein. Ergänzend oder alternativ kann angelenkt über das zweite Scharnier 7 eine Abdeckung vorgesehen sein, welche die weitere Anzeigeeinrichtung 8 insbesondere in der Nichtgebrauchsstellung des Laptops schützt.

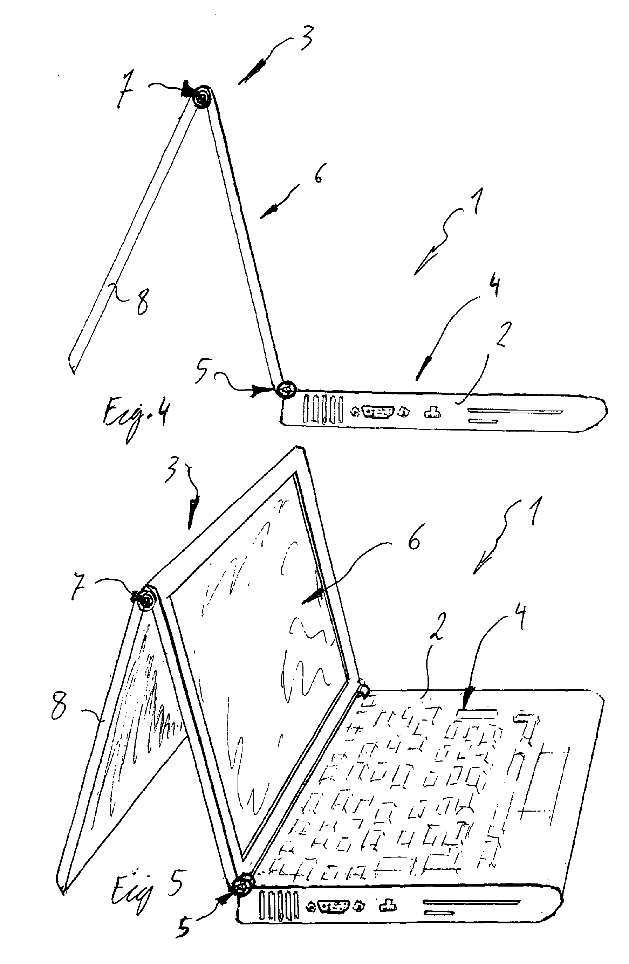

Die Figuren 4 und 5 zeigen die Ausrichtung der beiden Anzeigeeinrichtungen 6, 8 im Falle einer Präsentation mit dem Laptop 1. In dieser Stellung ist die zweite Anzeigeeinrichtung 8 relativ zu der originären Anzeigeeinrichtung 6 um das zweite Scharnier 7 verschwenkt ausgerichtet. Beide Anzeigeeinrichtungen sind mit ihrer Schauseite in einem Winkel von etwa 120 Grad relativ zu einer horizontalen Auflagefläche des Laptops 1 ausgerichtet. In dieser Position kann der Inhalt auf beiden Bildschirmen 6, 8 von Betrachtern auf beiden Seiten des Laptops gut wahrgenommen werden. Der in dem Gehäuse 2 aufgenomme Prozessor ist dabei so programmiert, dass auf beiden Bildschirmen 6, 8 die gleichen Inhalte in gleicher Formatierung und Darstellung angezeigt werden.

Das zweite Scharnier 7 ist so ausgebildet, dass die weitere Anzeigeeinrichtung 8 in eine Richtung relativ zu dem originären Bildschirm 6 verschwenkt werden kann, so dass die weitere Anzeigeeinrichtung in Verlängerung des ersten Bildschirmes 6 vorgesehen ist. Beide Bildschirme 6, 8 liegen dann im Wesentlichen in einer Ebene. Durch Programmierung über die Eingabeeinrichtung 4 bzw. einen Winkelsensor, der dem zweiten Scharnier 7 zugeordnet ist, jedenfalls aber die winkelige Stellung der beiden Bildschirme 6, 8 relativ zueinander misst, kann auf die Programmierung des Laptops 1 Einfluss genommen werden, derart, dass in einer solchen Ausrichtung die Inhalte auf beiden Bildschirmen 6, 8 von dem Benutzer des Laptops 1 in richtiger Darstellung wahrgenommen werden können. Dies bedeutet, dass der auf dem zweiten Bildschirm 8 angezeigte Inhalt gegenüber der in den Figuren 4 und 5 gezeigten Darstellung gedreht wird. Bei dieser Ausrichtung ergibt sich für den Benutzer ein Laptop mit vergrößerter Darstellbarkeit optischer Inhalte. Beide Bildschirme 6, 8 können von dem Benutzer zeitgleich eingesehen werden.

Die vorliegende Erfindung ist nicht auf das gezeigte Ausführungsbeispiel beschränkt. So können die Scharniere 5, 7 so ausgebildet sein, dass die weitere Anzeigeeinrichtung 8 im geschlossenen Zustand des Laptops 1 sich zwischen der originären Anzeigeeinrichtung 6 und der Tastatur 4 befindet. In diesem Fall dient der Gehäusedeckel 3 dem Schutz des originären Bildschirmes 6, des weiteren Bildschirmes 8 sowie der Tastatur 4.

### Bezugszeichenliste

- 1: Laptop
- 2: Gehäuse
- 3: Gehäusedeckel
- 4: Eingabeeinrichtung / Tastatur
- 5: Erstes Scharnier
- 6: Originäre Anzeigeeinrichtung / originärer Bildschirm
- 7: Zweites Scharnier
- 8: Weitere Anzeigeeinrichtung / weiterer Bildschirm

## Patentansprüche

1. Laptop (1) mit einem Gehäuse (2), welches einen Prozessor in sich aufnimmt und eine Eingabeeinrichtung (4) trägt, die mit dem Prozessor zusammenwirkt, und mit einem verschwenkbar an dem Gehäuse (2) gelagerten Gehäusedeckel (3) mit Anzeigeeinrichtung (6), der auf das Gehäuse (2) zum Verschließen auflegbar ist und im hochgeschwenkten Zustand von dem Gehäuse (2) so abragt, dass die Anzeigeeinrichtung (6) dem die Eingabeeinrichtung (4) bedienenden Benutzer zugewandt ist,
**dadurch gekennzeichnet,**
**dass** auf der der Anzeigeeinrichtung (6) abgewandten Seite des Gehäusedeckels (3) eine weitere, mit dem Prozessor zusammenwirkende Anzeigeeinrichtung (8) vorgesehen ist.

2. Laptop (1) nach Anspruch 1, **gekennzeichnet durch** eine verschwenkbar an dem Gehäuse (2) gelagerte, gegen die weitere Anzeigeeinrichtung (8) anlegbare Abdeckung.

3. Laptop (1) nach Anspruch 2, **dadurch gekennzeichnet, dass** die Abdeckung derart verschwenkbar vorgesehen ist, dass diese im hochgeschwenkten Zustand des Gehäusedeckels (3) in einer Ausrichtung im wesentlichen parallel zu dem Gehäuse (2) angeordnet werden kann.

4. Laptop (1) nach einem der vorherigen Ansprüche, **dadurch gekennzeichnet, dass** die weitere Anzeigeeinrichtung (8) verschwenkbar an einem freien Ende der Anzeigeeinrichtung (6) angeordnet ist.

5. Laptop (1) nach einem der vorherigen Ansprüche, **dadurch gekennzeichnet, dass** die Abdeckung und die weitere Anzeigeeinrichtung (8) über ein gemeinsames Scharnier (7) gelenkig an der Anzeigeeinrichtung (6) angelenkt sind.

6. Laptop (1) nach einem der vorherigen Ansprüche, **gekennzeichnet durch** eine auf der der Anzeigeeinrichtung (6) abgewandten Seite vorgesehene weitere Eingabeeinrichtung, die mit dem Prozessor kommuniziert.

7. Laptop (1) nach Anspruch 6, **dadurch gekennzeichnet, dass** die weitere Eingabeeinrichtung eine Tastatur umfasst, die auf der der weiteren Anzeigeeinrichtung (8) zugewandten Innenseite der Abdeckung vorgesehen ist.

8. Laptop (1) nach einem der Ansprüche 1 bis 7, **gekennzeichnet durch** einen Schalter, der bei die weitere Anzeigeeinrichtung (8) abdeckender Abdeckung die weitere Anzeigeeinrichtung (8) zwangsläufig ausschaltet.
